## Europäisches Patentamt
## European Patent Office
## Office européen des brevets

(11) Veröffentlichungsnummer: **0 241 639**
**B1**

(12) EUROPÄISCHE PATENTSCHRIFT

(45) Veröffentlichungstag der Patentschrift:
09.08.89

(51) Int. Cl.⁴: **B60G 7/00**

(21) Anmeldenummer: 87100667.2

(22) Anmeldetag: 20.01.87

(54) Radführungsglied.

(30) Priorität: 09.04.86 DE 3611915

(43) Veröffentlichungstag der Anmeldung:
21.10.87 Patentblatt 87/43

(45) Bekanntmachung des Hinweises auf die Patenterteilung:
09.08.89 Patentblatt 89/32

(84) Benannte Vertragsstaaten:
DE FR GB IT

(56) Entgegenhaltungen:
EP-A- 0 001 337
US-A- 2 000 255

PATENT ABSTRACTS OF JAPAN, Band 8,
Nr. 284 (M-348)[1721], 26. Dezember 1984; &
JP-A-59 153 607 (MITSUBISHI RAYON K.K.) 01-09-1984
INGENIEURS DE L'AUTOMOBILE, Nr. 3, April-Mai 1983,
Seiten 21-25, Paris, FR; M.P. LARGUIER: "Les
composites et la mécanique: pose du problème"
ENGINEERING, MATERIALS & DESIGN, Band 27, Nr. 9,
September 1983, Seiten 52-60, London, GB; "Designing
for stress in plastics"

(73) Patentinhaber: Dr.Ing.h.c. F. Porsche
Aktiengesellschaft, Porschestrasse 42,
D-7000 Stuttgart 40(DE)

(72) Erfinder: Mast, Peter, Dipl.-Ing., Breslauer Strasse 22,
D-7031 Ehningen(DE)
Erfinder: Wehr, Thomas, Dipl.-Ing., Bauernstrasse 133,
D-7257 Ditzingen 1(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Radführungsglied nach dem Oberbegriff des Anspruchs 1. Eine derartige Vorrichtung ist aus der Patentschrift JP-A 59 153 607 bekannt.

Aufgabe der Erfindung ist es, ein Radführungsglied zu schaffen, das ein relativ geringes Gewicht aufweist und die Festigkeitsanforderungen wie ein metallisches Radführungsglied erfüllt.

Diese Aufgabe wird erfindungsgemäß durch die kennzeichnenden Merkmale des Anspruchs 1 gelöst. Weitere vorteilhafte Ausbildungen der Erfindung beinhalten die Unteransprüche.

Die mit der Erfindung hauptsächlich erzielten Vorteile bestehen in einer Gewichtsverminderung und einer daraus resultierenden Reduzierung der ungefederten Massen. Die Verwendung von Faserverbundwerkstoffen für die Lenkerarme ergibt durch die mögliche Ausrichtung der Fasern gezielte Festigkeits- und Elastizitätswerte. Auch können für die Lenkerarme entsprechend der Ausbildung als auf Druck und Zug belastete Träger, verschiedene Materialien wie Kohlefaser, Glasfaser oder Aramydfaser verwendet werden, was eine optimierte Werkstoffausnutzung ergibt.

Wenn die Streben Wickelverfahren hergestellt werden, lassen sich die Krafteinleitungsteile direkt integrieren, wodurch sich ohne zusätzliche Verklebung der Klebelaschen eine kraftschlüssige Verbindung ergibt.

Bei der Verwendung von Streben in viereckiger Ausführung wird durch die eingesteckten Krafteinleitungselemente durch Formschluß ein Verdrehen unterbunden.

Ein Ausführungsbeispiel der Erfindung ist in der Zeichnung dargestellt und wird nachstehend näher beschrieben.

Es zeigt

Fig. 1 eine Draufsicht auf ein Radführungsglied aus Faserverbundwerkstoff,

Fig. 2 einen Schnitt durch einen Knotenpunkt des Radführungsgliedes nach der Linie II-II der Fig. 1,

Fig. 3 einen Schnitt durch ein in einen Lenker des Radführungsgliedes eingesetztes Krafteinleitungselement nach der Linie III-III der Fig. 1, und

Fig. 4 einen Schnitt durch einen weiteren Knotenpunkt des Radführungsgliedes nach der Linie IV-IV der Fig. 1

Das Radführungsglied 1 umfasst im wesentlichen mehrere Träger 2, 3 und 4 aus einem Faserverbundwerkstoff, z.B. Kohlefaser, Glasfaser oder Aramydfaserwerkstoff, die zu einer Einheit durch Kleben miteinander verbunden werden.

Zum Verbinden von Faserverbundwerkstoffen gibt es die Möglichkeit des Aushärtens von sich innig miteinander verbindenden Klebeschichten der Träger bei Raumtemperatur, des Aushärtens in einem Ofen ohne Druck oder des Aushärtens in einem Autoklav mit Druck.

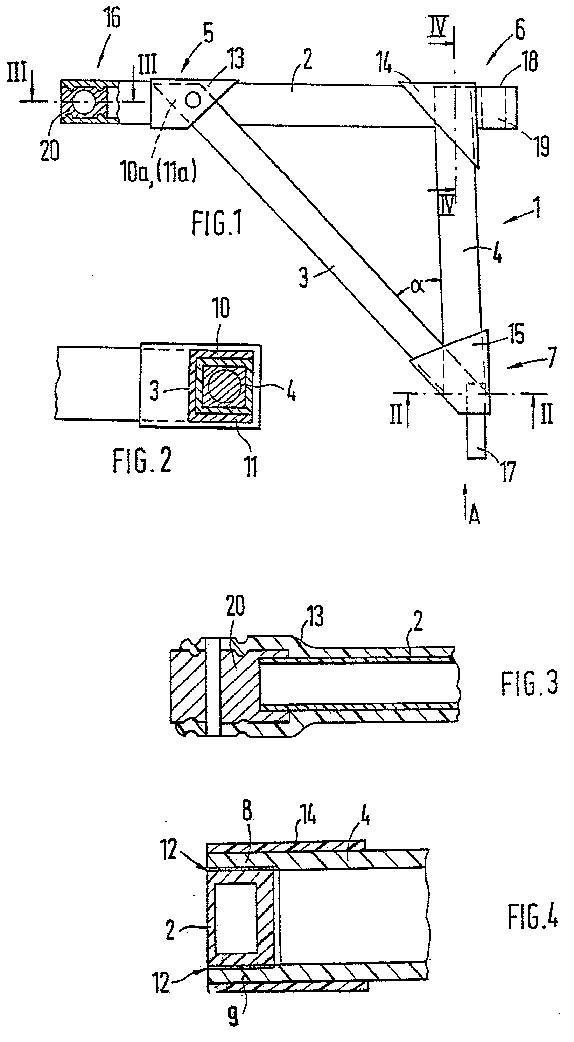

Die Träger weisen vorzugsweise einen viereckigen Querschnitt auf und bestehen, wie Fig. 1 am Beispiel eines Dreiecklenkers näher zeigt, aus einem Basisträger 2 und zwei Stützträgern 3 und 4. Im zusammentreffenden Endbereich sind die jeweils in einem Knotenpunkt 5, 6 und 7 miteinander innig verbunden. Der Knotenpunkt 6 ist in Fig. 4 näher dargestellt und zeigt den Stützträger 4, der so bearbeitet ist, daß sich zwei parallel gegenüberstehende frei vorragende Schenkel 8 und 9 bilden, die den Basisträger 2 überlappen und formschlüssig übergreifen. Entsprechend ist auch der Stützträger 3 mit Schenkeln 10, 11 ausgeführt, wie Fig. 2 zeigt. Zwischen den Trägern 3, 4 und 2, 4 ist zum klebenden Verbinden jeweils eine Schicht 12 z.B. aus Epoxidharz vorgesehen.

Zum Verstärken der Träger-Verbindung sind zusätzliche Klebelaschen 13, 14 und 15 angebracht, die eine Versteifung der Knotenpunkte 5, 6 und 7 bewirken.

Am Basisträger 2 ist endseitig an seinem freien Ende 16 ein Krafteinleitungselement 20 angeordnet, das in den Träger 2 eingesteckt wird und mittels der Klebelasche 13 festsetzbar ist, wie Fig. 3 zeigt.

Ebenfalls eingebettet und festgesetzt in den Stützträger 4 ist der Zapfen 17 für ein Lenkerlager, das z.B. aufbauseitig abgestützt ist. Der Basisträger 2 weist an einem über den Stützträger 4 herausgeführten Ende 18 eine Bohrung 19 zur Bildung eines weiteren aufbauseitigen Lagers auf.

Die Träger 2, 3 und 4 des Radführungsgliedes 1 können stranggezogen oder gewickelt sein. Eine Kombination von gewickelten und stranggepressten Trägern ist ebenso möglich wie die Verwendung von unterschiedlichen Faserverbundwerkstoffen in einem Radführungsglied 1.

## Patentansprüche

1. Radführungsglied für ein Kraftfahrzeug mit Lenkerarmen, die miteinander zu einer Baueinheit verbundene Stützträger (2, 3, 4) umfassen, welche aus einem Faserverbundwerkstoff bestehen und jeweils stoffschlüssig miteinander verbunden sind, dadurch gekennzeichnet, daß die Stützträger (2, 3, und 4) einen viereckigen Querschnitt aufweisen und endseitig in einem Knotenpunkt (5, 6 und 7) über aus einem Faserverbundwerkstoff bestehende Klebelaschen (13, 14 und 15) verbunden sind, wobei die freien Enden der zusammenlaufenden Stützträger (2, 3 und 4) sich innerhalb der Klebelaschen zur Verbindung überlappend umgreifen.

2. Radführungsglied nach Anspruch 1, dadurch gekennzeichnet, daß zur Verbindung der Stützträger (2 und 4) im Knotenpunkt (6) der Träger (4) vorragende parallele Schenkel (8 und 9) umfaßt, die den weiteren Träger (2) zwischen sich aufnehmen.

3. Radführungsglied nach Anspruch 1, dadurch gekennzeichnet, daß zur Verbindung der Stützträger (3 und 4) im Knotenpunkt (7) der Träger (3) vorragende parallele Schenkel (10, 11) aufweist, die den weiteren Träger (4) von außen umgreifen.

4. Radführungsglied nach einem oder mehreren der vorhergehenden Ansprüche, dadurch gekennzeichnet, daß der Träger (2) an seinem freien Ende (16) mit einem aufsteckbaren Krafteinleitungselement (20) versehen ist, das über die innige Verbindung der Klebelasche (13) mit den Trägern (2 und 3) verbunden wird.

5. Radführungsglied nach einem oder mehreren der vorhergehenden Ansprüche, dadurch gekennzeichnet, daß im Knotenpunkt (7) der beiden Stützträger (3, 4) ein weiteres Krafteinleitungsteil (17) vorgesehen ist, das in die Klebelasche (15) eingebunden gehalten wird.

6. Radführungsglied nach einem oder mehreren der vorhergehenden Ansprüche, dadurch gekennzeichnet, daß der Basisträger (2) an seinem dem Krafteinleitungsteil (20) abgekehrten freien Ende über den Stützträger (4) hinaussteht und eine Bohrung (19) für die Ausbildung eines Lagers zum Fahrzeugaufbau hin aufweist.

7. Radführungsglied nach einem oder mehreren der vorhergehenden Ansprüche, dadurch gekennzeichnet, daß die Träger (3, 4) des Radführungsgliedes (1) aus verschiedenen Faserverbundmaterialien wie Kohlefaser, Glasfaser, Aramydfaserwerkstoff bestehen und miteinander verbunden sind.

## Claims

1. A wheel guiding unit for a motor vehicle with guide arms which embrace support members (2, 3, 4) which are connected together to form a structural unit and consist of a composite fibre material and which are connected together by material in each case, characterized in that the support members (2, 3 and 4) have a square cross-section and are connected at their ends in a junction point (5, 6 and 7) by way of adhesion straps (13, 14 and 15) consisting of a composite fibre material, the free ends of the converging support members (2, 3 and 4) embracing one another in an overlapping manner inside the adhesion straps for connexion purposes.

2. A wheel guiding unit according to Claim 1, characterized in that in order to connect the support members (2 and 4) in the junction point (6) the member (4) embraces projecting parallel arms (8 and 9) which receive the further member (2) between them.

3. A wheel guiding unit according to Claim 1, characterized in that in order to connect the support members (3 and 4) in the junction point (7) the member (3) comprises projecting parallel arms (10, 11) which engage around the further member (4) from outside.

4. A wheel guiding unit according to one or more of the preceding Claims, characterized in that the member (2) is provided at its free end (16) with an attachable force-introducing element (20) which is connected to the members (2 and 3) by way of the internal connexion of the adhesion strap (13).

5. A wheel guiding unit according to one or more of the preceding Claims, characterized in that a further force-introducing element (17), which is held tied in the adhesion strap (15), is provided in the junction point (7) of the two support members (3, 4).

6. A wheel guiding unit according to one or more of the preceding Claims, characterized in that at its free end remote from the force-introducing element (20) the base member (2) projects beyond the support member (4) and has a bore (19) for forming a bearing towards the vehicle body.

7. A wheel guiding unit according to one or more of the preceding Claims, characterized in that the members (3, 4) of the wheel guiding unit (1) consist of various composite fibre materials such as carbon fibres, glass fibres, aramid fibre material and are connected to each other.

## Revendications

1. Elément de guidage de roue pour véhicule automobile, avec des bras de liaison, comprenant des bras d'appui 2, 3, 4 qui sont réunis de manière à former un ensemble, réalisés en matériaux composites renforcés par des fibres et assemblés en formant une continuité de la manière qui les compose, caractérisé par le fait que les bras d'appui (2, 3, 4) sont de section quadrangulaire et qu'à leurs extrémités ils sont réunis dans des points de jonction (5, 6, 7) au moyen d'éclisses collées (13, 14, 15) réalisés en matériaux composites renforcés par des fibres, que les extrémités libres des barres supports convergentes (2, 3, 4) s'imbriquent et se recouvrent entre elles pour réaliser la jonction à l'intérieur des éclisses.

2. Elément de guidage de roue selon la revendication 1, caractérisé par le fait que pour l'assemblage des barres supports (2 et 4), au point de jonction (6) la barre (4) présente en bout des côtés parallèles débordant (8 et 9) entre lesquels vient s'emboîter l'autre barre support (2).

3. Elément de guidage selon la revendication 1, caractérisé par le fait que pour l'assemblage des barres supports (3 et 4), au point de jonction (7) la barre (4) présente en bout des côtés parallèles débordants (10, 11) entre lesquels vient s'emboîter l'autre barre support (4).

4. Elément de guidage de roue selon une ou plusieurs des revendications ci-dessus, caractérisé par le fait qu'à son extrémité libre (16) la barre support (2) est équipé d'un élément d'application de la charge (20) qui est lié aux barres supports (2 et 3) du fait du collage intime avec le couvre-joint (13).

5. Elément de guidage de roue selon une ou plusieurs des revendications ci-dessus, caractérisé par le fait qu'au point de jonction (7) des deux barres supports (3, 4) il est prévu un autre élément d'application de la charge, un tourillon (17) qui est fixé bridé dans l'éclisse collée (15).

6. Elément de guidage de roue selon l'une ou plusieurs des revendications ci-dessus, caractérisé par le fait que la barre support principale (2) comporte, à son extrémité libre opposée à celle où se trouve l'élément d'application de la charge (20) et qui déborde en arrière de la barre support (4), un alésage (19) pour constituer un point de logement et de pivotement du côté de la carrosserie du véhicule.

7. Elément de guidage de roue selon une ou plusieurs des revendications ci-dessus, caractérisé par le fait que les barres (1) sont réalisées en différentes matières composites liées par des fibres de natures diverses telles que des fibres de carbone, des fibres de verre, des matières avec fibres d'aramydes et qu'elles sont réunies entre elles.

EP 0 241 639 B1

FIG.1

FIG.2

FIG.3

FIG.4